(19) **Europäisches Patentamt**
**European Patent Office**
**Office européen des brevets**

(11) **EP 1 644 894 B1**

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(21) Anmeldenummer: **04740532.9**

(22) Anmeldetag: **01.07.2004**

(51) Int Cl.:
***G06T 5/00*** *(2006.01)*

(86) Internationale Anmeldenummer:
**PCT/EP2004/007166**

(87) Internationale Veröffentlichungsnummer:
**WO 2005/008584 (27.01.2005 Gazette 2005/04)**

(54) **VERFAHREN ZUM HERSTELLEN EINES KORRIGIERTEN RÖNTGENBILDDATENSATZES**

METHOD FOR THE PRODUCTION OF A CORRECTED X-RAY IMAGE DATA SET

PROCEDE DE PRODUCTION D'UN GROUPE DE DONNEES D'IMAGES RADIOGRAPHIQUES CORRIGEES

(84) Benannte Vertragsstaaten:
**BE DE FR**

(30) Priorität: **16.07.2003 DE 10332344**

(43) Veröffentlichungstag der Anmeldung:
**12.04.2006 Patentblatt 2006/15**

(73) Patentinhaber: **SIEMENS AKTIENGESELLSCHAFT**
**80333 München (DE)**

(72) Erfinder: **SCHULZ, Reiner Franz**
**91077 Dormitz (DE)**

(56) Entgegenhaltungen:
**DE-A- 19 719 954**

• **ROWLANDS J A: "The physics of computed radiography" PHYS. MED. BIOL. (UK), PHYSICS IN MEDICINE AND BIOLOGY, 7 DEC. 2002, IOP PUBLISHING, UK, Bd. 47, Nr. 23, 20. November 2002 (2002-11-20), Seiten R123-R166, XP002293656 ISSN: 0031-9155**
• **B. KRAUSE UND R. KULZER: "Langzeitergebnisse der Konstanzprüfung an einem Speicherfoliensystem" MEDIZINISCHE PHYSIK 2002. DGMP, ÖGMP, SGSMP. HRSG. HERWIG MANDL UND HANS GFIRTNER., [CD-ROM] 2002, XP002293657 DGMP ISBN: 3-925218-75-0**

EP 1 644 894 B1

**Beschreibung**

Die Erfindung betrifft ein Verfahren zum Korrigieren der Bildpunkte eines Röntgenbilddatensatzes.

Röntgengeräte umfassen als Strahlungsdetektor z.B. eine Speicher- oder Bildplatte. Es kann sich dabei jeweils um ein Substrat handeln, auf das eine Röntgenspeicherleuchtstoffschicht abgeschieden ist. Eine solche Bildplatte ist üblicherweise in einer Kassette angeordnet. Die bei Durchtritt durch das Untersuchungsobjekt geschwächte Röntgenstrahlung trifft auf der Speicherfolie als Röntgenintensitätsverteilung auf und wird dort absorbiert. Dabei werden Elektronen in Leuchtstoffkristallen in einen angeregten metastabilen Zustand überführt. Mit Fotosimulation werden die in metastabilen Zuständen befindlichen Elektronen nochmals angeregt und kehren infolgedessen in ihren Grundzustand zurück. Dabei wird der Röntgenintensitätsverteilung proportionales Licht emittiert und mit einer geeigneten und dem Fachmann beispielsweise aus Schulz, Forschungsbericht Röntgenstrahlung 2001 (173), Seiten 1137-1146 bekannten Ausleseeinrichtung erfasst. Eine der Ausleseeinrichtung nachgeschaltete Rechnereinrichtung berechnet aus den ausgelesenen Daten einen Röntgenbilddatensatz.

Die Empfindlichkeit der Speicherfolie kann inhomogen sein, so dass bei Bestrahlung der Bildplatte mit einer homogenen Röntgenintensitätsverteilung das entsprechende Röntgenbild unterschiedliche Grauwerte aufweist. Um die inhomogene Empfindlichkeit der Speicherfolie auszugleichen, können daher die einzelnen Bildpunkte des Röntgenbilddatensatzes mit jeweils einem den einzelnen Bildpunkten zugeordneten Korrekturwerten korrigiert und insbesondere normiert werden. Die einzelnen Korrekturwerte können beispielsweise für eine individuelle Bildplatte vor deren Auslieferung experimentell ermittelt und einmalig auf einem Datenspeicher der Ausleseeinrichtung gespeichert werden. Ein solches Verfahren ist beispielsweise aus der Offenlegungsschrift DE 197 19 954 A1 bekannt.

Bei bestimmten Materialien für die Speicherfolie kann sich außerdem die Empfindlichkeit mit der akkumulierten Röntgenstrahlung, der die Speicherfolie ausgesetzt ist, ändern. Solche Materialien sind z.B. dotierte Alkalihalogenide, beispielsweise KBr, RbI, RbBr, CSBr dotiert mit IN, Ga, TL und/oder Eu. Da die Röntgenstrahlung durch das Untersuchungsobjekt geschwächt wird, unterscheiden sich die applizierten Röntgenstrahlendosen der einzelnen Teilbereiche der Speicherfolie. So sind z.B. die Randbereiche der Speicherfolie in der Regel einer höheren Röntgenstrahlendosis ausgesetzt als Bereiche nahe der Mitte der Speicherfolie. Allgemein unterscheiden sich also die akkumulierten Röntgenstrahlendosen der einzelnen Teilbereiche der Speicherfolie. Folglich ändern sich auch die Empfindlichkeiten der Teilbereiche der Speicherfolie mit der Zeit, d.h. mit der Anzahl hergestellter Röntgenbilddatensätze unterschiedlich.

Die Aufgabe der Erfindung ist es daher, ein Verfahren anzugeben, bei dem die sich ändernden Empfindlichkeiten der Teilbereiche der Speicherfolie aufgrund der akkumulierten Röntgstrahlendosen der Speicherfolie bei der Korrektur berücksichtigt werden.

Die Aufgabe wird gelöst durch ein Verfahren zum Korrigieren der Bildpunkte eines Röntgenbilddatensatzes, aufweisend folgende Verfahrensschritte:

- Aufnehmen einer Röntgenaufnahme von einem Untersuchungsobjekt mit einem Röntgengerät, das als Strahlungsdetektor eine eine Speicherleuchtstoffschicht aufweisende Speicherfolie umfasst, wobei sich die Empfindlichkeit der Speicherleuchtstoffschicht mit der akkumulierten Röntgenstrahlendosis, die die Speicherleuchtstoffschicht ausgesetzt ist, ändert,

- nach der Röntgenaufnahme, Auslesen der Speicherfolie mit einer Ausleseeinrichtung,

- aus den durch den Auslesevorgang ermittelten Daten, Erstellen eines der Röntgenaufnahme zugeordneten Röntgenbilddatensatzes und

- Korrigieren jedes Bildpunktes des Röntgenbilddatensatzes mit einem dem entsprechenden Bildpunkt zugeordneten Korrekturwert, wobei jeder einzelne Korrekturwert aufgrund der akkumulierten Röntgenstrahlendosis, die der Teil der Speicherfolie vor der Röntgenaufnahme ausgesetzt wurde, die dem entsprechenden Bildpunkt des Röntgenbilddatensatzes zugeordnet ist, angepasst wird.

Da sich die Empfindlichkeit der Speicherfolie unterschiedlich mit der jeweiligen akkumulierten Röntgenstrahlendosis ändert, wird somit erfindungsgemäß der Korrekturwert für jeden Bildpunkt des Röntgenbilddatensatzes aufgrund der akkumulierten Röntgenstrahlendosis, den Teilbereiche der Speicherfolie ausgesetzt waren, angepasst. Aus Messungen kann dabei die Änderung der Empfindlichkeit eines bestimmten Speicherleuchtstoffes als Funktion der akkumulierten Röntgenstrahlendosis experimentell ermittelt werden. Es kann also für eine Art von Speicherfolie bzw. Speicherleuchtstoff die Funktion $EB_{i,j}^m = f(D_{i,j}^m)$, also der Korrekturwert für die m-te Röntgenaufnahme als Funktion der akkumulierten Röntgenstrahlendosis $D_{i,j}^m$ ermittelt werden, um dann die einzelnen Korrekturwerte entsprechend anzupassen. Je nach Speicherfolienmaterial ergeben sich mehr oder weniger komplexe Funktionen, wie z.B. überlagerte e-Funktionen.

Der m-ten Röntgenbilddatensatz, also der aktuell zu erstellende Röntgenbilddatensatz, wird nach einer Variante der Erfindung gemäß der folgenden Beziehung korrigiert:

$$B_{i,j}^m = a * RB_{i,j}^m / EB_{i,j}^m \, .$$

Dabei ist *a* ein erster Skalierungsfaktor, $RB_{i,j}^m$ das Signal des Bildpunktes i, j des m-ten Röntgenbilddatensatzes, $EB_{i,j}^m$ der Korrekturwert für den Bildpunkt i, j des m-ten Röntgenbilddatensatzes und $B_{i,j}^m$ das Signal des Bildpunktes i, j des m-ten korrigierten Röntgenbilddatensatzes. Bei dieser Art der Korrektur handelt es sich um eine Normierung des Röntgenbilddatensatzes.

In manchen Fällen, wie z.B. bei CsBr:Eu als Speicherfolienmaterialien ist die Änderung der Empfindlichkeit bei üblicherweise applizierten Röntgenstrahlendosen linear mit der akkumulierten Röntgenstrahlendosis. Nach einer bevorzugten Ausführungsform des erfindungsgemäßen Verfahrens wird daher die akkumulierte Röntgenstrahlendosis $D_{i,j}^m$ für den dem Bildpunkt i, j zugeordneten Teilbereich der Speicherfolie für den m-ten Röntgenbilddatensatz nach folgender Beziehung ermittelt:

$$D_{i,j}^m = \sum_{n=1}^{m-1} b * B_{i,j}^n \, ,$$

wobei *b* ein zweiter Skalierungsfaktor ist.

Somit kann nach einer bevorzugten Variante des erfindungsgemäßen Verfahrens der Korrekturwert $EB_{i,j}^m$ für den Bildpunkt i, j des m-ten Röntgenbilddatensatzes nach folgender Beziehung ermittelt werden:

$$EB_{i,j}^m = EB_{i,j}^0 - s * \left( \sum_{n=1}^{m-1} b * B_{i,j}^n \right) \, ,$$

wobei *s* eine Konstante und $EB_{i,j}^0$ der Korrekturwert ist, der der Speicherfolie ohne applizierte Röntgenstrahlendosis zugeordnet ist.

Zur Rauschunterdrückung können auch die Korrekturwerte mittels Tiefpassfilterung geglättet werden. Da ferner die applizierte Röntgenstrahlendosis pro Aufnahme relativ klein sein kann, kann es ausreichen, dass die Korrekturwerte nicht bei jeder Aufnahme aktualisiert werden. So kann es unter Umständen ausreichen, eine Aktualisierung nach 10, 100 oder auch nach 1000 Aufnahmen durchzuführen.

Ein Ausführungsbeispiel ist exemplarisch in den beigefügten schematischen Figuren näher dargestellt. Es zeigen:

Fig. 1  ein Röntgengerät mit einer Speicherplatte,

Fig. 2  eine Ausleseeinrichtung für die in der Fig. 1 dargestellte Speicherplatte und

Fig. 3  eine grafische Darstellung der Änderung der Empfindlichkeit der in der Fig. 1 gezeigten Speicherplatte als Funktion der akkumulierten Röntgenstrahlendosis.

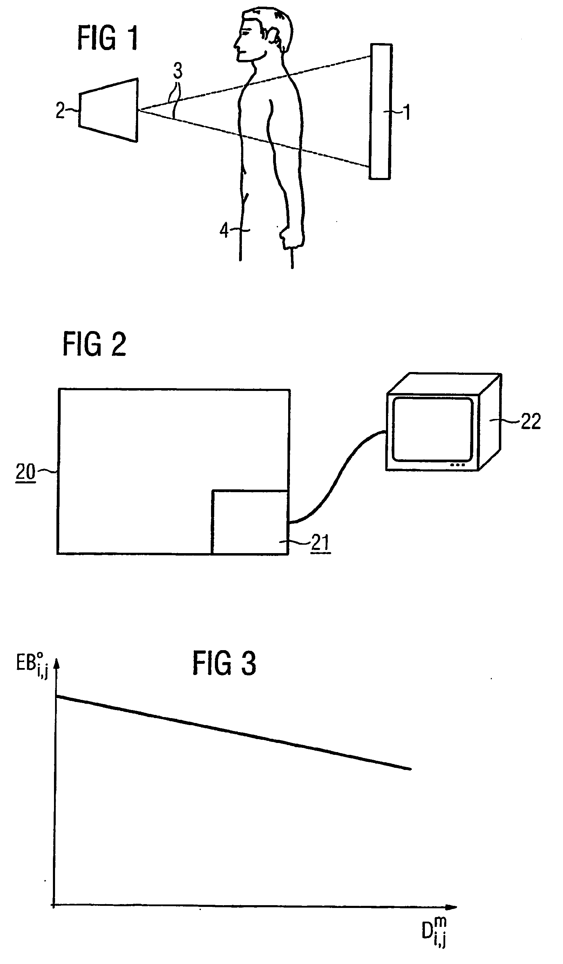

Die Fig. 1 zeigt in einer schematischen Ansicht ein Röntgengerät mit einer eine Speicherfolie aufweisenden Speicherplatte 1. Ein von der Röntgenstrahlenquelle 2 des Röntgengerätes ausgehendes Röntgenstrahlenbündel 3, dessen Randstrahlen in der Fig. 1 strichliert dargestellt sind, wird beim Durchtritt durch ein Untersuchungsobjekt, im Falle des vorliegenden Ausführungsbeispiels einen Patienten 4, geschwächt und trifft als eine Röntgenstrahlenintensitätsverteilung auf der Speicherplatte 1 auf. Die Röntgenstrahlenintensitätsverteilung wird von der Speicherfolie, die im Falle des vorliegenden Ausführungsbeispiels eine Röntgenspeicherleuchtstoffschicht aus CsBr:Eu umfasst, absorbiert.

Nach der Röntgenaufnahme wird die Speicherplatte 1 mit einer in der Fig. 2 schematisch gezeigten und z.B. aus Schulz, Forschungsbericht Röntgenstrahlung 2001 (173), Seiten 1137-1146 bekannten Ausleseeinrichtung 20 ausgewertet. Mittels der Ausleseeinrichtung 20 wird eine Einfallsfläche der Speicherplatte 1 homogen mit Licht bestrahlt. Das infolgedessen von der Speicherplatte 1 emittierte Licht wird erfasst und mittels einer Datenverarbeitungseinrichtung 21 der Ausleseeinrichtung 20 in einen matrixförmigen Röntgenbilddatensatz umgewandelt. Um die Empfindlichkeiten unterschiedlicher Teilbereiche der Speicherfolie der Speicherplatte 1 aufgrund unterschiedlich akkumulierter Röntgenstrahlendosen auszugleichen, werden die einzelnen Bildpunkte des Röntgenbilddatensatz im Falle des vorliegenden Ausführungsbeispiels folgendermaßen korrigiert:

$$B_{i,j}^m = a * RB_{i,j}^m / EB_{i,j}^m \, ,$$

wobei *a* ein Skalierungsfaktor, $RB_{i,j}^m$ das Signal des Bildpunktes i, j des Röntgenbilddatensatzes, $EB_{i,j}^m$ ein Korrekturwert für den Bildpunkt i, j des Röntgenbilddatensatzes und $B_{i,j}^m$ das Signal des Bildpunktes i, j des korrigierten Röntgenbilddatensatzes ist. Der Index *m* bedeutet dabei, dass es sich um den m-ten Röntgenbilddatensatz handelt bzw. dass vor der aktuellen Röntgenaufnahme mit der Speicherplatte 1 bereits (m-1) Röntgenaufnahmen hergestellt wurden. Das dem die einzelnen Bildpunkte $B_{i,j}^m$ umfassenden korrigierten Röntgenbilddatensatz zugeordnete Röntgenbild kann im Falle des vorliegenden Ausführungsbeispiels mit einem mit der Datenverarbeitungseinrichtung 21 verbundenen Monitor 22 betrachtet werden.

Im Falle des vorliegenden Ausführungsbeispiels ändert die Röntgenspeicherleuchtstoffschicht der Speicherplatte 1 seine Empfindlichkeit linear mit der akkumulierten Röntgenstrahlendosis $D_{i,j}^m$ und zwar wie in der Fig. 3 grafisch dargestellt. Daher werden die einzelnen den entsprechenden Bildpunkten $RB_{i,j}^m$ des Röntgbilddatensatzes zugeordneten Korrekturwerte $EB_{i,j}^m$ im Falle des vorliegenden Ausführungsbeispiels nach folgender Beziehung berechnet:

$$EB_{i,j}^m = EB_{i,j}^0 - s * \left( \sum_{n=1}^{m-1} b * B_{i,j}^n \right) .$$

Dabei sind $b$ und $s$ weitere Konstanten, wobei $s$ die Steigung des Korrekturwertes als Funktion der akkumulierten Röntgenstrahlendosis ist. $EB_{i,j}^0$ ist der Korrekturwert des Röntgenspeicherleuchtstoffes ohne applizierter Röntgenstrahlendosis bzw. zu einem bestimmten Zeitpunkt, zu dem der Korrekturwert beispielsweise experimentell ermittelt wurde.

## Patentansprüche

1. Verfahren zum Korrigieren der Bildpunkte eines Röntgenbilddatensatzes, aufweisend folgende Verfahrensschritte:

   - Aufnehmen einer Röntgenaufnahme von einem Untersuchungsobjekt (4) mit einem Röntgengerät, das als Strahlungsdetektor eine eine Speicherleuchtstoffschicht aufweisende Speicherfolie (1) umfasst, wobei sich die Empfindlichkeit der Speicherleuchtstoffschicht mit der akkumulierten Röntgenstrahlendosis, der die Speicherleuchtstoffschicht ausgesetzt ist, ändert,
   - nach der Röntgenaufnahme, Auslesen der Speicherfolie (1) mit einer Ausleseeinrichtung (2),
   - aus den durch den Auslesevorgang ermittelten Daten, Erstellen eines der Röntgenaufnahme zugeordneten Röntgenbilddatensatzes und
   - Korrigieren jedes Bildpunktes des Röntgenbilddatensatzes mit einem dem entsprechenden Bildpunkt zugeordneten Korrekturwert, wobei jeder einzelne Korrekturwert aufgrund der akkumulierten Röntgenstrahlendosis, die der Teil der Speicherfolie vor der Röntgenaufnahme ausgesetzt wurde, die dem entsprechenden Bildpunkt des Röntgenbilddatensatzes zugeordnet ist, angepasst wird.

2. Verfahren nach Anspruch 1, bei dem die einzelnen Bildpunkte $RB_{i,j}^m$ des m-ten Röntgenbilddatensatzes gemäß der folgenden Beziehung korrigiert werden:

$$B_{i,j}^m = a * RB_{i,j}^m / EB_{i,j}^m ,$$

wobei

   $a$ ein erster Skalierungsfaktor,

   $RB_{i,j}^m$ das Signal des Bildpunktes i, j des m-ten Röntgenbilddatensatzes,

   $EB_{i,j}^m$ der Korrekturwert für den Bildpunkt i, j des m-ten Röntgenbilddatensatzes und

   $B_{i,j}^m$ das Signal des Bildpunktes i, j des m-ten korrigierten Röntgenbilddatensatzes ist.

3. Verfahren nach Anspruch 2, bei dem die akkumulierte Röntgenstrahlendosis $D_{i,j}^m$ für den dem Bildpunkt i, j des Röntgenbilddatensatzes zugeordneten Teilbereich der Speicherfolie (1) für den m-ten Röntgenbilddatensatz nach folgender Beziehung ermittelt wird:

$$D_{i,j}^m = \sum_{n=1}^{m-1} b * B_{i,j}^n ,$$

.

wobei $b$ ein zweiter Skalierungsfaktor ist.

4. Verfahren nach Anspruch 3, bei dem der Korrekturwert $EB_{i,j}^m$ für den Bildpunkt i, j des m-ten Röntgenbilddatensatzes nach folgender Beziehung ermittelt wird:

$$EB_{i,j}^m = EB_{i,j}^0 - s * \left( \sum_{n=1}^{m-1} b * B_{i,j}^n \right),$$

wobei seine Konstante und $EB_{i,j}^0$ der Korrekturwert ist, der der Speicherfolie (1) ohne applizierter Röntgenstrahlendosis zugeordnet ist.

**Claims**

1. Method for correcting the pixels of an x-ray image data set, having the following method steps:

   - acquisition of an x-ray exposure of an examination subject (4) with an x-ray apparatus that comprises a storage film (1) as an x-ray detector, which storage film comprises a memory luminophore layer, the sensitivity of the memory luminophore layer changing with the accumulated x-ray dose, to which the memory luminophore layer is exposed,
   - readout of the storage film (1) with a readout device (2) after the x-ray exposure,
   - generation, from the data determined via the readout process, of an x-ray image data set associated with the x-ray exposure
   - correction of each pixel of the x-ray image data set with a correction value associated with the corresponding pixel, with each individual correction value being adapted based on the accumulated x-ray dose to which the part of the storage film containing the corresponding pixel of the x-ray image data set was exposed before the current x-ray exposure.

2. Method according to claim 1, in which the individual pixels $RB_{i,j}^m$ of the m-th x-ray image data set are corrected according to the following relation:

$$B_{i,j}^m = a * RB_{i,j}^m / EB_{i,j}^m,$$

with

   a being a first scaling factor,

   $RB_{i,j}^m$ being the signal of the pixel i,j of the m-th x-ray image data set,

   $EB_{i,j}^m$ being the correction value for the pixel i,j of the m-th x-ray image data set and

$B_{i,j}$ being the signal of the pixel i,j of the m-th corrected x-ray image data set.

3. Method according to claim 2, in which the accumulated x-ray dose $D_{i,j}^m$ for the sub-region of the storage film that is associated with the pixel i, j of the x-ray image data set is therefore determined according to the following relation for the mth x-ray image data set:

$$D_{i,j}^m = \sum_{n-1}^{m-1} b * B_{i,j}^n,$$

with b being a second scaling factor.

4. Method according to claim 3, with which the correction value $EB_{i,j}^m$ for the pixel i,j of the m-th x-ray image set can thus be determined according to the following relation:

$$EB_{i,j}^m = EB_{i,j}^0 - s * \left( \sum_{n-1}^{m-1} b * B_{i,j}^n \right),$$

with s being a constant and $EB_{i,j}^0$ being the correction value that is associated with the storage film (1) without applied x-ray dose.

**Revendications**

1. Procédé pour corriger les points images d'un jeu de données d'image radiographique, comportant les étapes suivantes :

   - prise d'un enregistrement radiographique d'un objet soumis à examen (4), à l'aide d'un appareil radiographique qui, en tant que détecteur de rayonnement, comprend une feuille de stockage (1) comportant une feuille fluorescente de stockage, la sensibilité de la couche fluorescente de stockage variant avec la dose cumulée de rayons X à laquelle est exposée la couche fluorescente de stockage,
   - après la radiographie, lecture de la feuille de stockage (1) à l'aide d'un dispositif de lecture (2) ,
   - à partir des données déterminées par l'opération de lecture, établissement d'un jeu de données d'image radiographique affectées à la radiographie, et

- correction de chaque point image du jeu de données de l'image radiographique avec une valeur de correction affectée au point image correspondant, chaque valeur de correction individuelle étant adaptée sur la base de la dose de rayons X cumulée à laquelle a été exposée la partie de la feuille de stockage, avant la radiographie, qui est affectée au point d'image correspondant du jeu de données de l'image radiographique.

2. Procédé selon la revendication 1, dans lequel les points images individuels $RB_{i,j}^{m}$ du m-ième jeu de données d'image radiographique sont corrigés selon la relation suivante :

$$B_{i,j}^{m} = a * RB_{i,j}^{m} / EB_{i,j}^{m}$$

dans laquelle

a est un premier facteur d'échelle,

$RB_{i,j}^{m}$ est le signal du point image i, j du m-ième jeu de données d'image radiographique,

$EB_{i,j}^{m}$ est la valeur de correction pour le point image i, j du m-ième jeu de données d'image radiographique, et

$B_{i,j}^{m}$ est le signal du point image i, j du m-ième jeu de données d'image radiographique corrigé.

3. Procédé selon la revendication 2, dans lequel la dose de rayons X cumulée $D_{i,j}^{m}$ pour la zone partielle, affectée au point image i, j du jeu de données d'image radiographique, de la feuille de stockage (1), est déterminée pour le m-ième jeu de données d'image radiographique conformément à la relation suivante :

$$D_{i,j}^{m} = \sum_{n-1}^{m-1} b * B_{i,j}^{n} ,$$

où b représente un deuxième facteur d'échelle.

4. Procédé selon la revendication 3, dans lequel la valeur de correction $EB_{i,j}^{m}$ pour le point image i, j du mième jeu de données d'image radiographique est déterminée selon la relation suivante :

$$EB_{i,j}^{m} = EB_{i,j}^{0} - s * (\sum_{n=1}^{m-1} b * B_{i,j}^{n}) ,$$

dans laquelle s est une constante et $EB_{i,j}^{0}$ est la valeur de correction qui est affectée à la feuille de stockage (1) sans dose de rayons X appliquée.

FIG 1

FIG 2

FIG 3

$EB^{o}_{i,j}$

$D^{m}_{i,j}$